# EUROPEAN PATENT SPECIFICATION

(11) **EP 1 172 057 B1**
(45) Date of publication and mention of the grant of the patent: **29.09.2004**
(21) Application number: 01117035.4
(22) Date of filing: 12.07.2001
(51) Int. Cl.: A47J 37/12, A47J 27/62

(54) **Cooking utensil**
Kochgerät
Ustensile de cuisson

(30) Priority: 14.07.2000 JP 2000214487
(43) Date of publication of application: 16.01.2002
(73) Proprietor: Paloma Industries, Ltd., Nagoya-shi, Aichi-ken (JP)
(72) Inventor: Suzuki, Akira, Nagoya-shi, Aichi-ken (JP); Kito, Shoji, Nagoya-shi, Aichi-ken (JP); Yamaguchi, Motoharu, Nagoya-shi, Aichi-ken (JP)
(74) Representative: Sajda, Wolf E., Dipl.-Phys.

(56) References cited:
- EP-A- 0 285 056
- WO-A-99/11978
- GB-A- 2 318 650

## Description

### BACKGROUND OF THE INVENTION

### FIELD OF THE INVENTION

The present invention relates to a cooking utensil such as a fryer for heating and cooking a food by using predetermined heating means as known from document WO 9911978.

### DESCRIPTION OF THE PRIOR ART

For example, a fryer is used to perform frying by putting a food in an oil vessel comprising heating means such as a pulse burner. Such a fryer requires maintenance such as cleaning or oil leakage check at stated cycles. Conventionally, the maintenance has been managed in accordance with a schedule (such as a schedule on paper or management data input to a personal computer) prepared by the user himself.

There are a plenty of maintenance items, and it is required to execute maintenance at a different cycle for each item. Thus, when a schedule is managed manually, there is a danger that a manager forgets the schedule when the time of maintenance has come. Therefore, there has been a problem that maintenance is not performed at a proper time as scheduled, which makes the execution time inaccurate.

### SUMMARY OF THE INVENTION

The present invention has been made in order to solve the foregoing problem. It is an object of the present invention to provide a cooking utensil capable of precisely managing a maintenance schedule, and reliably executing maintenance at the managed schedule.

According to a first aspect of the present invention, there is provided a cooking utensil for cooking a food by using predetermined heating means, said cooking utensil comprising:
maintenance time setting means capable of arbitrarily setting a time for executing maintenance; and informing means for informing the execution time set by the maintenance time setting means.

According to a second aspect of the present invention, in addition to an advantageous effect of the first aspect, there is provided a cooking utensil, wherein the execution time is defined as a period when a standard date set in a predetermined cycle based on a calendar function has expired to excute maintenance regularly.

According to a third aspect of the present invention, in addition to an advantageous effect of the first or second aspect, there is provided a cooking utensil, wherein the execution time is defined as a time when a cumulative value of the operating time of the heating means has reached a predetermined standard time to execute maintenance more appropriately according to the actual using condition of a cooking utensil.

According to a fourth aspect of the present invention, in addition to an advantageous effect of any of the first to third aspects, there is provided a cooking utensil, wherein the execution time is defined as a time when a cumulative value of the number of times of operation of the heating means has reached a predetermined standard number of times to execute maintenance more appropriately according to the actual using condition of a cooking utensil.

According to a fifth aspect of the present invention, in addition to an advantageous effect of any of the first to fourth aspects, there is provided a cooking utensil, wherein the execution time can be set individually for each maintenance item to execute appropriate schedule management for each maintenance item.

According to a sixth aspect of the present invention, in addition to an advantageous effect of any of the first to fifth aspects, there is provided a cooking utensil, wherein the set execution time can be arbitrarily changed to flexibly set the maintenance execution period.

According to a seventh aspect of the present invention, in addition to an advantageous effect of any of the first to sixth aspects, there is provided a cooking utensil, wherein, after informing the execution time, said information is automatically called off by performing the corresponding maintenance work to reliably encourage to execute maintenance.

According to an eighth aspect of the present invention, in addition to an advantageous effect of the first to seventh aspects, there is provided a cooking utensil, wherein, after the information has been called off, a next execution time can be automatically set on the same cycle condition to save labor to set the next execution time after informing the present execution time.

According to a ninth aspect of the present invention, in addition to an advantageous effect of the first to eighth aspects, there is provided a cooking utensil, wherein the informing means displays a predetermined sign on an operating panel for the heating means to inform without any problem during normal cooking.

According to a tenth aspect of the present invention, in addition to an advantageous effect of the ninth aspect, there is provided a cooking utensil, wherein, a maintenance item can be displayed through a predetermined operation of a switch provided on the operating panel to rapidly recognize concreat item of maintenance by display of the predetermined sign.

Additional objects and advantages of the invention will be set forth in the description which follows, and in part will be obvious from the description, or may be learned by practice of the invention. The objects and advantages of the invention may be realized and obtained by means of the instrumentalities and combinations particularly pointed out hereinafter.

### BRIEF DESCRIPTION OF THE DRAWINGS

The accompanying drawings, which are incorporated in and constitute a part of the specification, illustrate presently preferred embodiment of the present invention and, together with the general description given above and the detailed description of the preferred embodiment given below, serve to explain the principle of the present invention.
FIG. 1 is an illustrative view of a fryer;
FIG. 2 is an illustrative view of an operating panel;
FIG. 3A is an illustrative view of an operating panel when a specific mode selection screen 1 is displayed;
FIG. 3B is an illustrative view of an operating panel when a specific mode selection screen 2-1 is displayed;
FIG. 3C is an illustrative view of an operating panel when a specific mode selection screen 2-2 is displayed;
FIG. 4A is an illustrative view illustrating a display of an operating panel when a maintenance period is set;
FIG. 4B is an illustrative view illustrating a display of an operating panel when a maintenance period is set;
FIG. 4C is an illustrative view illustrating a display of an operating panel when a maintenance period is set;
FIG. 5 is an illustrative view illustrating a display of an operating panel when a maintenance period is informed;
FIG. 6 is a flow chart showing information control based on a cooking time; and
FIG. 7 is a flow chart showing information control based on the cooking count.

### DETAILED DESCRIPTION OF THE INVENTION

Hereinafter, a preferred embodiment of the present invention will be described with reference to the accompanying drawings.

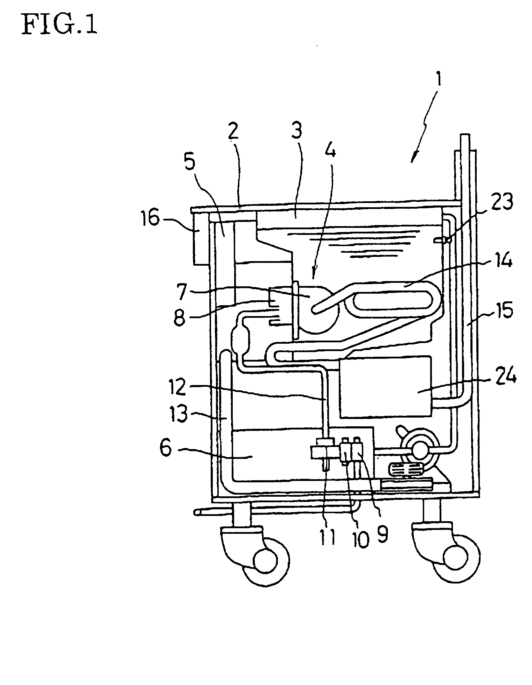

FIG. 1 is an illustrative view entirely illustrating a commercial fryer 1 (hereinafter, referred to as "fryer") as an example of a cooking utensil. A fryer 1 is provided in a casing2 with a pair of left and right oil vessels 3, 3 filled with cooking oil (hereinafter, referred to as "oil") for frying a food; a pulse burner 4 that is a heating means for heating up the oil, provided in each oil vessel 3; a controller 5 for mainly controlling combustion of the pulse burner 4; and an oil tank 6 for temporarily reserving oil in order to filtrate the oil contained in the oil vessels 3, 3.

The pulse burner 4 has a combustion chamber 7 formed in the oil vessel 3 and a mixing chamber 8 that communicates with the combustion chamber 7 outside of the oil vessel 3. The mixing chamber 8 is connected to a gas pipe 12 for supplying a fuel gas provided with, from the upstream side, an intake solenoid valve 9, amain solenoid valve 10, and a gas governor 11. The mixing chamber 8 is connected to an air supply pipe 13 comprising a fan for supplying combustion air.

Further, the combustion chamber 7 is communicated with a tail pipe 14 extending through the oil vessel 3, and the tail pipe 14 is connected to an exhaust pipe 15, that opens to the outside of the fryer 1, via a de-coupler 24 at the outside of the oil vessel 3.

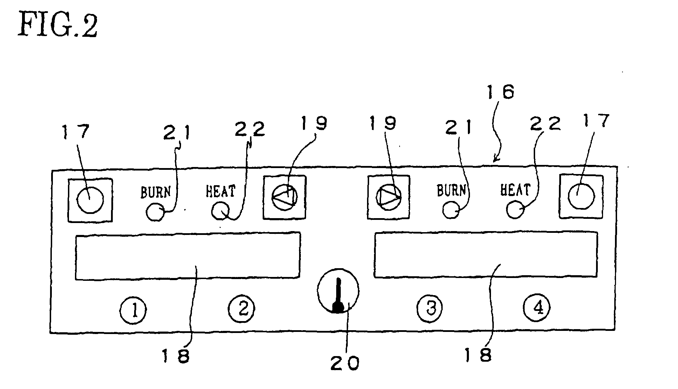

The controller 5 comprises an operating panel 16 at the front of a casing 2. FIG. 2 is a front view showing the operating panel 16. At the operating panel 16, there are provided operating switches 17, 17; display portions 18, 18 for displaying the name of a food on the menu, temperature or the like; cooking start switches <1> to <4> located in pairs beneath each display portion 18 (hereinafter, referred to as a "switch <1>" or the like); and left and right feed switches 19, 19 for switching a display of the display portion 18, respectively, corresponding to each of the left and right oil vessels 3, and a thermometer switch 20 common to both of the oil vessels 3, 3 is provided between the display portions 18 and 18. Reference numerals 21, 21 denote combustion lamps, and reference numerals 22, 22 denote combustion demanding lamps. In addition, the controller 5 comprises a CPU (a central processing unit) for controlling operation of the fryer 1; a ROM having a control program stored therein; a RAM storing various types of control data; and an interface for data exchange. This CPU delivers a control command to each portion of the equipment in accordance with a program read out from the ROM, and performs processing according to data output from each portion of the equipment. A temperature sensor 23 provided at the oil vessel 3 and a variety of switches provided on the operating panel 16 are connected to the input side of the CPU. Each of the solenoid valves, a fan motor, various types of lamps and the like are connected to the output side of the CPU.

Therefore, in a normal mode, each switch is operated on the operating panel 16, thereby making it possible to implement normal operation control for selecting food, cooking or displaying an oil temperature. For example, when a left operating switch 17 is pressed, the pulse burner 4 operates to implement ON / OFF control for switching combustion and a combustion stop by opening and closing the main solenoid valve 10 based on a signal from the temperature sensor 23, and to maintain the oil temperature in the oil vessel 3 in a predetermined range. Here, on the display portion 18, a food on the menu (for example, potato or the like) is displayed. By pressing a feed switch 19, a target food can be selected and displayed. Thereafter, when a switch <1> is pressed after putting a food in the oil vessel 3, the counting of the preset cooking time for the selected food is started. Then, when the cooking time terminates, the switch <1> blinks, and the alarm goes off, indicating that the cooking has terminated.

On the operating panel 16, apart from use in such a normal mode, use in a special mode is available to enable to set a timer or a temperature used in a normal mode, change of various names or the like. Specifically, the special mode includes: a program mode for setting parameters used for cooking of each food; a setup mode for providing various types of settings such as displayed language setting, sound-level control, or temperature calibration; a maintenance informing mode for verifying what kind of maintenance should be performed and checking up on the completion when a maintenance time is informed in a normal mode; a maintenance time setting mode for setting time to inform maintenance; a cooking time adjustment mode for automatically measuring and adjusting a cooking time; and a boil-out mode for boiling the oil vessel 3.

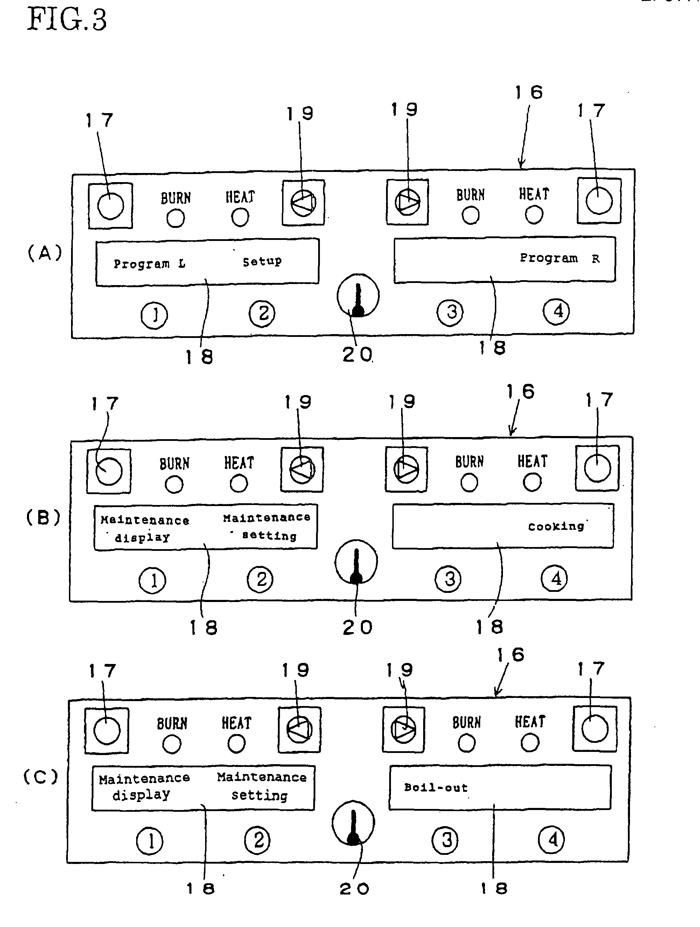

During switching to any one of these modes, when the left and right feed switches 19, 19 are pressed for three seconds, a special mode selection screen 1 is displayed as shown in FIG. 3A. Then, when the right feed switch 19 is pressed, a special mode selection screen 2-1 shown in FIG. 3B or a special mode selection screen 2-2 shown in FIG. 3C is displayed according as the operating switch 17 is turned ON. That is, in a cooking time adjustment mode, a cooking timer is adjusted while actual operation is made. Thus, only in the case where switching to the special mode is established while the operating switch 17 is turned ON, the screen is displayed as shown in FIG. 3B. In a boil-out mode, cold or hot water is poured into the oil vessel 3, and is boiled. Thus, only in the case where switching to the special mode is established while the operating switch 17 is turned OFF, the screen is displayed as shown in FIG. 3C in order to prevent the boil-out mode from implementing when there is oil in the vessel 3.

When any of the special mode selection screens 2-1 and 2-2 is displayed, a desired maintenance time setting mode is selected by pressing the switch <2> that corresponds to a display "maintenance setting" in the maintenance time setting mode. Hereinafter, procedures for setting a maintenance time will be described.

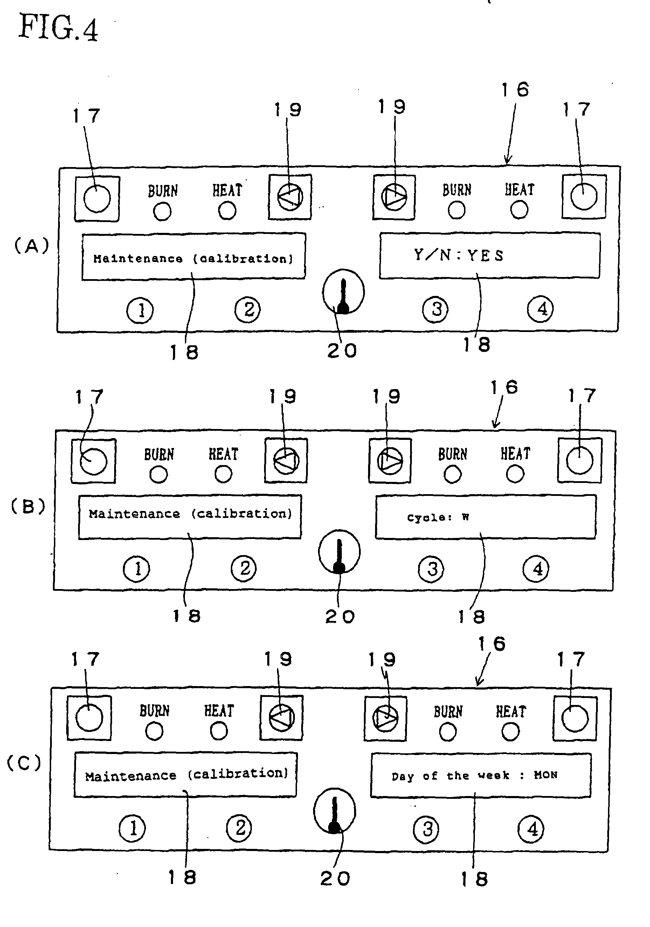

As described previously, a maintenance time setting mode is selected by pressing the switch <2> on the display shown in FIG. 3C. When the switch <1> or <2> is pressed, a message "maintenance (calibration) " is displayed on the left display portion 18, as shown in FIG. 4A. On the right display portion 18, there appears a display "Y / N: YES", which prompts a user to select whether or not information is performed when a maintenance time has come. Therefore, "Y / N : YES" and "Y / N : NO" are sequentially displayed by pressing the switch <4>. Informing the maintenance time is selected by displaying " YES ".

Next, when the switch <3> is pressed, "Cycle : W" is displayed on the right display portion 18 as shown in Fig. 4(B). When the switch <4> is pressed, "Cycle : W" , "Cycle : M", "Cycle : Q", "Cycle : H" , and "Cycle : Y" are cyclically displayed in this order (where W denotes one week, M denotes one month; Q denotes three months; H denotes a half year; and Y denotes one year for the cycle). For example, when the switch <3> is pressed after "W" has been displayed, "Day of the week : SUN" is displayed on the right display portion. When the switch <4> is pressed in this state, "MON", "TUE", "WED", "THU", "FRI", "SAT", and "SUN" are cyclically displayed in this order for a day of the week. For example, when "MON" is displayed, every Monday is set as a standard date to perform the calibration based on a calendar. In this state, a thermometer switch 20 functions as a switch for storing the information item setting. When the thermometer switch 20 is pressed, the standard date is stored. Otherwise, a standard date can be set for every month, three months, half year, or year by operating the switches <3> and <4> in a similar way to the above procedures . Even after a maintenance time has been set, the setting can be changed arbitrarily by displaying a special mode selection screen similarly.

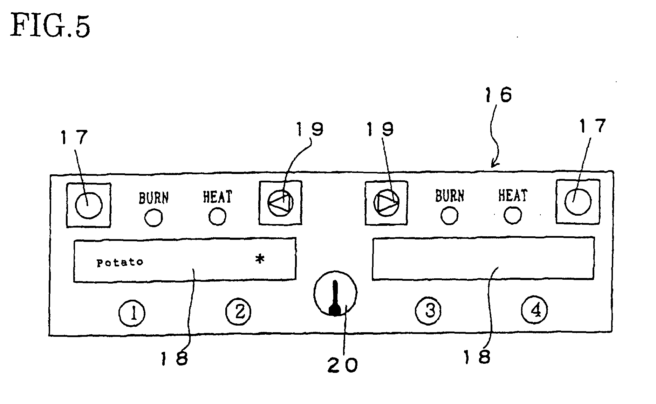

After a standard date is thus set by the maintenance time setting means, when the fryer 1 is powered ON on the standard day or later, or when the standard day has come while the fryer 1 is operating, the necessity of maintenance is informed on the operating panel 16. Specifically, as shown in FIG. 5, in a normal mode, an asterisk * blinks as informing means at the end of the left display portion 18. Therefore, in the case where this display appears, any of the special mode selection screens 2-1 and 2-2 is displayed by operating the left and right feed switches 19, 19, as described previously. Then, pressing the switch <1> that corresponds to "maintenance display" makes it possible to enter a maintenance informing mode. Each specific item name for which maintenance should be performed is displayed at the display portion 18 together with a cursor. For example, "Calib" for calibration, "Clean" for fryer cleaning, "oil" for oil leakage check or the like is displayed.

The asterisk * is designed to be automatically erased when all the items displayed in the maintenance informing mode are erased (by pressing the switch <4> at the cursor position). At the same time, the controller 5 sets a next standard date according to the date when all items displayed on the maintenance informing mode are erased and a preset cycle. For example, in the case where the informing cycle is set to one week, it is automatically updated to a value obtained by adding 7 to the date of the erasure; or in the case where the informing period is set to one month, it is automatically updated to a value obtained by adding 1 to the month of the erasure.

As has been described above, according to the above embodiment, the fryer 1 comprises: maintenance time setting means capable of arbitrarily setting an execution time for each maintenance item; and informing means for informing the execution time set by the maintenance time setting means, thereby enabling maintenance schedule management by the fryer 1 itself, and the information is automatically performed. Therefore, the schedule is precisely managed, and a maintenance can be executed at a proper time informed in accordance with the managed schedule, thereby a maintenance delay or cycle inaccuracy can be prevented. In addition, only one initial maintenance time setting suffices, thus eliminating a worker doing cumbersome work involved in schedule management.

Further, the execution time is defined as a time when a standard date set at a predetermined cycle based on a calendar function has expired, thereby maintenance can be performed cyclically in accordance with the calendar.

On the other hand, an execution time can be set individually for each maintenance item, and thus, a proper execution time can be set according to each maintenance item. In addition, a temporarily set execution time can be arbitrarily changed, thereby making it possible to flexibly set the execution time.

After the execution time has been informed, the corresponding maintenance work is performed, thereby the information marked with the asterisk * is automatically called off. Thus, if a maintenance is not performed, the information is continued, and reliable execution of the maintenance is prompted. In particular, informing means is the display of the asterisk *, and thus, the information can be performed on the display portion 18 without any problem during normal cooking.

Further, after the display of the asterisk * has been called off, a next execution time can be automatically set in the same cycle, thus eliminating cumbersome work for the setting of the next execution time.

After the asterisk * has been displayed, a special mode selection screen is displayed by operating the feed switches 19, 19, thereby making it possible to display a specific maintenance item. Thus, even if the information displaying only the asterisk * occurs, a maintenance item to be executed can be recognized speedily.

In the above embodiment, although the description has been given with the example when maintenance is managed by using a calendar function irrespective of an actual using state of the fryer 1, management based on the using state of the fryer 1 can be performed. Hereinafter, although a description of each modified example will be given, basic operating procedures for the operating panel 16 itself are similar to those in the above embodiment except that the settings at the execution time in a maintenance time setting mode are different. A brief description will be given with reference to the corresponding flow chart.

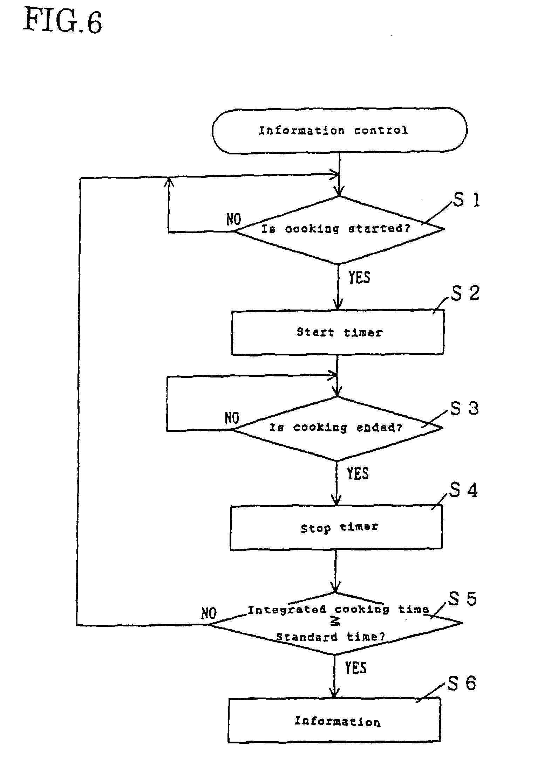

For example, FIG. 6 shows an example when a maintenance schedule is managed according to a cooking time (operating time of the pulse burner 4). At the step S1, the pulse burner 4 starts combustion, and cooking is started. At the step S2, a timer for counting a cooking time is started. At the step S3, the end of cooking is checked. At the step S4, the timer is stopped, and the cooking time is integrated. When it is judged at the step S5 that the integrated cooking time reaches a preset standard time (for example, 500 hours) or more, the information displaying the asterisk * is performed at the step S6. Therefore, in the maintenance time setting mode, a maintenance item managed in accordance with the cooking time is selected, and the standard time to be informed may be set.

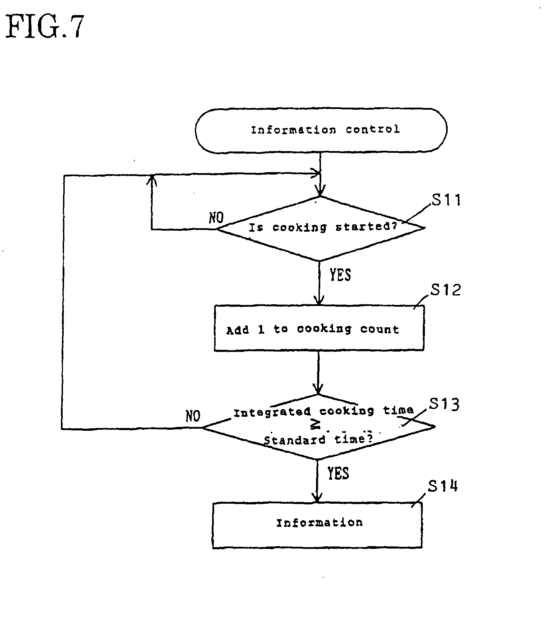

FIG. 7 shows an example when a maintenance schedule is managed according to the cooking count (the number of operating the pulse burner 4) At the step S11, the pulse burner 4 starts combustion, and cooking is started. At the step S12, 1 is added to a memory of the controller 5 every cooking. At the step S13, if the integrated cooking count reaches a preset standard count (for example, 500 counts) or more, the information displaying the asterisk * is performed at the step S14, Therefore, in the maintenance time setting mode, a maintenance item managed in accordance with the cooking count is selected, and the standard count to be informed may be set.

As has been described above, in the above modified example, a maintenance execution time is informed according to an actual using state of the fryer 1, thus enabling more proper maintenance according to the using state. Of course, in the above modified example as well, the cooking time or cooking count can be arbitrarily reset for each maintenance item. In addition, maintenance work corresponding to the contents of the information is performed, thereby making it possible to automatically call off the information, and automatically update the contents of the next information after calling off the information.

Otherwise, the informing means may include an alarm , lamp, voice or the like or a combination thereof without being limited to the above display of the asterisk. Advantageous Effect of the Invention

According to a first aspect of the present invention, there is provided: maintenance time setting means capable of arbitrarily setting a time for executing maintenance; and informing means for informing the execution time set by the maintenance time setting means, thereby making it possible for a cooking utensil itself to manage a maintenance schedule, and thereby the information is automatically performed. Therefore, a schedule can be precisely managed, and maintenance can be executed at a proper time informed in accordance with the managed schedule, thereby a maintenance delay or cycle inaccuracy can be prevented. In addition, only one initial maintenance time setting suffices, thus eliminating a worker doing cumbersome work involved in schedule management.

According to a second aspect of the present invention, in addition to an advantageous effect of the first aspect, the execution time is defined as a time when a standard date set in a predetermined cycle based on a calendar function has expired, thereby maintenance can be performed cyclically in accordance with a calendar.

According to a third aspect of the present invention, in addition to an advantageous effect of the first or second aspect, the execution time is defined as a time when a cumulative value of the operating time of the heating means has reached a predetermined standard time, thereby maintenance can be performed more properly according to the actual using state of the cooking utensil.

According to a fourth aspect of the present invention, in addition to an advantageous effect of any of the first to third aspects, the execution time is defined as a time when a cumulative value of the number of times of the operation of the heating means has reached a predetermined standard number of times, thereby maintenance can be performed more properly according to the actual using state of the cooking utensil.

According to a fifth aspect of the present invention, in addition to an advantageous effect of any of the first to fourth aspects, the execution time can be set individually for each maintenance item, thereby a proper schedule management can be performed for each maintenance item.

According to a sixth aspect of the present invention, in addition to an advantageous effect of any of the first to fifth aspects, the set execution time can be arbitrarily changed, thereby the maintenance execution time can be set flexibly.

According to a seventh aspect of the present invention, in addition to an advantageous effect of any of the first to sixth aspects, after informing the execution time, said information is automatically called off by performing the corresponding maintenance work, thereby, if a maintenance is not performed, the information is continued, prompting a worker to execute the maintenance.

According to an eighth aspect of the present invention, in addition to an advantageous effect of the first to seventh aspects, after the information has been called off, a next execution time can be automatically set on the same cycle condition, thereby cumbersome work involved in setting of the next execution time can be eliminated after the execution time has been informed.

According to a ninth aspect of the present invention, in addition to an advantageous effect of the first to eighth aspects, the informing means displays a predetermined sign on an operating panel for the heating means, thereby information can be performed without any problem during normal cooking.

According to a tenth aspect of the present invention, in addition to an advantageous effect of the ninth aspect, after the predetermined sign has been displayed, a maintenance item can be displayed through a predetermined operation of a switch provided on the operating panel, thereby, even if information displaying a predetermined sign occurs, a maintenance item can be recognized speedily.

Additional advantages and modifications will readily occur to those skilled in the art. Therefore, the invention in its broader aspect is not limited to the specific details and representative embodiment shown and described herein. Accordingly, various modifications may be made without departing from the scope of the general inventive concept.

## Claims

1. A cooking utensil for cooking food by using predetermined heating means (4), the cooking utensil (1) comprising:
- setting means (5, 16) adapted to implement normal operation control; and
- informing means (16 to 18) adapted to inform about the necessity of maintenance,
**characterized in that**
the setting means (5, 16) are capable of arbitrarily setting a time for executing maintenance, where the execution time can be set individually for each maintenance item, and the execution time set by the setting means is indicated for information by the information means,
and **in that** a maintenance display (16, 18) is adapted to display each specific item name for which maintenance should be performed,
thereby enabling maintenance schedule management.

2. The cooking utensil according to claim 1,
wherein the execution time is defined as a time when a standard date set in a predetermined cycle based on a calendar function has expired.

3. The cooking utensil according to claim 1 or 2,
wherein the execution time is defined as a time when an accumulated value of the operating time of the heating means (4) has reached a predetermined standard time.

4. The cooking utensil according to any of claims 1 to 3,
wherein the execution time is defined as a time when the accumulated value of the number of times of the operation of the heating means (4) has reached a predetermined standard number of times.

5. The cooking utensil according to any of claims 1 to 4,
wherein the set execution time can be arbitrarily changed.

6. The cooking utensil according to any of claims 1 to 5,
wherein, after providing information about the execution time, the information (18) is automatically called off by performing the corresponding maintenance work.

7. The cooking utensil according to any of claims 1 to 6,
wherein, after the information (18) has been called off, a next execution time can automatically be set on the same cycle condition.

8. The cooking utensil according to any of claims 1 to 7,
wherein the information means (18) displays a predetermined sign on an operating panel (16) for the heating means (4).

9. The cooking utensil according to claim 8,
wherein, after the predetermined sign has been displayed (18), a maintenance item can be displayed through a predetermined operation of a switch (1-4, 17, 19) provided on the operating panel (16).

## Patentansprüche

1. Kochgerät zum Kochen von Speisen unter Verwendung einer vorbestimmten Heizeinrichtung (4), wobei das Kochgerät (1) folgendes aufweist:
- Einstelleinrichtungen (5, 16), die so ausgebildet sind, daß sie eine Normalbetriebssteuerung implementieren; und
- Informationseinrichtungen (16 bis 18), die so ausgebildet sind, daß sie über die Notwendigkeit einer Wartung informieren,
**dadurch gekennzeichnet,**
**daß** die Einstelleinrichtungen (5, 16) imstande sind, eine Zeit zum Ausführen einer Wartung beliebig einzustellen, wobei die Ausführungszeit für jedes Wartungselement einzeln eingestellt werden kann und die von den Einstelleinrichtungen eingestellte Ausführungszeit zur Information durch die Informationseinrichtungen angegeben wird,
und **daß** eine Wartungsanzeige (16, 18) so ausgebildet ist, daß sie jeden speziellen Elementnamen anzeigt, für den eine Wartung ausgeführt werden sollte,
so daß ein Wartungsablaufmanagement ermöglicht wird.

2. Kochgerät nach Anspruch 1,
wobei die Ausführungszeit als eine Zeit definiert ist, zu der ein Standarddatum abgelaufen ist, das auf der Basis einer Kalenderfunktion in einem vorbestimmten Zyklus vorgegeben worden ist.

3. Kochgerät nach Anspruch 1 oder 2,
wobei die Ausführungszeit als eine Zeit definiert ist, zu der ein akkumulierter Wert der Betriebsdauer der Heizeinrichtung (4) eine vorbestimmte Standardzeit erreicht hat.

4. Kochgerät nach einem der Ansprüche 1 bis 3,
wobei die Ausführungszeit als eine Zeit definiert ist, zu der der akkumulierte Wert der Anzahl von Malen des Betriebs der Heizeinrichtung (4) eine vorbestimmte Standardanzahl von Malen erreicht hat.

5. Kochgerät nach einem der Ansprüche 1 bis 4,
wobei die eingestellte Ausführungszeit beliebig geändert werden kann.

6. Kochgerät nach einem der Ansprüche 1 bis 5,
wobei nach der Abgabe von Information über die Ausführungszeit die Information (18) automatisch aufgerufen wird, indem die entsprechende Wartungsarbeit ausgeführt wird.

7. Kochgerät nach einem der Ansprüche 1 bis 6,
wobei, nachdem die Information (18) aufgerufen worden ist, eine nächste Ausführungszeit auf der Basis der gleichen Zyklusbedingung automatisch eingestellt werden kann.

8. Kochgerät nach einem der Ansprüche 1 bis 7,
wobei die Informationseinrichtung (18) an einem Bedienungsfeld (16) für die Heizeinrichtung (4) ein vorbestimmtes Zeichen anzeigt.

9. Kochgerät nach Anspruch 8,
wobei, nachdem das vorbestimmte Zeichen angezeigt worden ist, ein Wartungselement durch eine vorbestimmte Betätigung eines Schalters (1 bis 4, 17, 19), der an dem Bedienungsfeld (16) vorgesehen ist, angezeigt werden kann.

## Revendications

1. Ustensile de cuisson pour cuire de la nourriture en utilisant un moyen de chauffage prédéterminé (4), l'ustensile de cuisson (1) comprenant :
- des moyens de réglage (5, 16) adaptés pour mettre en oeuvre les commandes de fonctionnement normal ; et
- des moyens d'information (16 à 18) adaptés pour informer de la nécessité de maintenance,
**caractérisé en ce que**
les moyens de réglage (5, 16) sont capables de déterminer arbitrairement un moment pour exécuter la maintenance, ou le moment de l'exécution peut être déterminé individuellement pour chaque élément de maintenance et le moment d'exécution déterminé par le moyen de réglage est indiqué pour information par le moyen d'information,
et **en ce qu'**un affichage de maintenance (16, 18) est adapté pour afficher le nom de chaque élément spécifique pour lequel la maintenance doit être effectuée,
activant ainsi la gestion du programme de maintenance.

2. Ustensile de cuisson selon la revendication 1,
dans lequel le moment de l'exécution est défini comme le moment où une date standard réglée dans un cycle prédéterminé sur la base d'une fonction calendaire a expiré.

3. Ustensile de cuisson selon la revendication 1 ou 2,
dans lequel le moment de l'exécution est défini comme le moment où la valeur cumulée des durées de fonctionnement du moyen de chauffage (4) a atteint une durée de standard prédéterminée.

4. Ustensile de cuisson selon l'une quelconque des revendications 1 à 3,
dans lequel le moment de l'exécution est défini comme le moment où la valeur cumulée du nombre de durées de fonctionnement du moyen de chauffage (4) a atteint un nombre de durées standard prédéterminé.

5. Ustensile de cuisson selon l'une quelconque des revendications 1 à 4,
dans lequel ladite durée de l'exécution définie peut être modifiée arbitrairement.

6. Ustensile de cuisson selon l'une quelconque des revendications 1 à 5,
dans lequel, après indication des informations sur le moment de l'exécution, les informations (18) sont automatiquement effacées lors de l'exécution du travail de maintenance correspondant.

7. Ustensile de cuisson selon l'une quelconque des revendications 1 à 6,
dans lequel, après effacement des informations (18), le moment d'exécution suivant peut être automatiquement déterminée sur la même condition de cycle.

8. Ustensile de cuisson selon l'une quelconque des revendications 1 à 7,
dans lequel le moyen d'information (18) affiche un signe prédéterminé sur un panneau d'exploitation (16) pour le moyen de chauffage (4).

9. Ustensile de cuisson selon la revendication 8,
dans lequel, après que le signe prédéterminé a été affiché (18), un élément de maintenance peut être affiché par le biais d'une action prédéterminée sur un commutateur (1 à 4, 17, 19) prévu sur le panneau d'exploitation (16).
